# EUROPEAN PATENT SPECIFICATION

(11) **EP 3 564 525 B1**
(45) Date of publication and mention of the grant of the patent: **12.04.2023**
(21) Application number: 16925589.0
(22) Date of filing: 30.12.2016
(51) Int. Cl.: F03D 9/25, F03D 1/04

(54) **VERTICAL SHAFT WIND POWER GENERATOR DRIVING DEVICE FOR SELF-ADAPTIVE VARIABLE-PROPELLER, AND WIND POWER GENERATOR**
ANTRIEBSVORRICHTUNG EINES WINDENERGIEGENERATORS MIT VERTIKALER WELLE FÜR SELBSTVERSTELLBAREN PROPELLER UND WINDENERGIEGENERATOR
DISPOSITIF D'ENTRAÎNEMENT DE GÉNÉRATEUR ÉOLIEN À ARBRE VERTICAL POUR HÉLICE VARIABLE AUTO-ADAPTATIVE, ET GÉNÉRATEUR ÉOLIEN

(43) Date of publication of application: 06.11.2019
(73) Proprietor: CRRC Wind Power (Shandong) Co., Ltd., Ji'nan, Shandong 250104 (CN)
(72) Inventor: LU, Xiaoping, Ji'nan, Shandong 250104 (CN)
(74) Representative: ZHAOffice SPRL
(86) International application number: PCT/CN2016/113636
(87) International publication number: WO 2018/120073

(56) References cited:
- WO-A1-2014/181585
- CN-A- 103 899 487
- CN-A- 104 047 810
- CN-A- 104 047 810
- CN-A- 106 640 533
- CN-U- 202 001 189
- CN-U- 204 024 921
- CN-U- 204 344 368
- CN-Y- 2 546 647
- CN-Y- 2 546 647
- DE-A1-102013 101 725
- JP-A- 2012 137 039

## Description

### Field of the Invention

The present invention belongs to the field of wind power generation, and particularly relates to a wind turbine with a vertical axis of rotation.

### Background of the Invention

In China, wind energy resources are abundant and the development of wind power is rapid. Wind turbines mainly include horizontal axis and vertical axis ones. A horizontal axis scheme is generally used for large-scale wind turbines, while horizontal axis and vertical axis schemes are used for small-scale wind turbines, the horizontal axis scheme, which mainly works using the lift of blades, has the advantage of high power coefficient, but has the disadvantages that the windward direction needs to be adjusted according to the change in wind direction and the tower bears a large bending moment. Various vertical axis schemes are provided, mainly including resistance type, lift type and hybrid type schemes. The resistance type wind turbines include S type, wind cup type wind turbines, etc., which have the advantages of simple airfoil and good self-starting property, but have low wind power utilization coefficients; the lift type wind turbines include H type, Φ type wind turbines, etc., which have the advantages of high wind energy utilization, but have the disadvantages that a special airfoil is required and the self-starting property is poor; and the hybrid type wind turbines have the advantages of both the lift type wind turbines and the resistance type wind turbines, but are relatively complicated in structure.

Japanese Patent Application JP2012137039 discloses a hybrid power generation device in which solar power generation and wind power generation are combined. The wind power generation device is disposed below the solar power generation panels by stacking two or more of a variable vane wind turbine, a pyramid-like paddle wind turbine, a wind-cup-like paddle wind turbine and fixed acute angle tilt wind turbine, and provided with a plurality of wind collection duct for blowing the wind turbine with the wind taken by surrounding the wind turbine. The wind turbine is of the resistance type.

Chinese Patent Application CN2546647 discloses a self-stabilizing wind wheel for a small wind turbine.

### Summary of the Invention

In order to solve the problems of the prior art, a first objective of the present invention is to provide a wind turbine with a vertical axis of rotation.

A wind turbine with a vertical axis of rotation according to the present invention, comprises a tower, wherein a wind wheel and a motor are mounted at the top of the tower, the wind wheel comprises a plurality of blades, an adaptive variable pitch device is mounted on each blade, and the adaptive variable pitch devices are mounted on a rotor of the motor; a wind deflector below the wind wheel is further mounted on the tower, and the wind deflector is used for accumulating wind energy in all directions and blowing the wind energy vertically to the wind wheel, so that the wind wheel drives the rotor of the motor to rotate under the action of wind speed to generate electrical energy wherein the blades are of a horizontal axis lift type blade and the rotating parts of the wind turbine are concealed inside the wind deflector and the adaptive variable pitch device comprises a first support bearing, a blade root shaft, a torsion spring and a second support bearing; the blade root shaft is fixedly connected to the blade, the blade root shaft is connected to the first support bearing and the second support bearing respectively, the first support bearing and the second support bearing are both mounted on the rotor of the motor, the torsion spring is also sheathed on the blade root shaft, and the torsion spring is also fixed to the rotor of the motor.

Certain torque is preset for the torsion spring, and is aerodynamic torque acting on the blade root shaft at a rated wind speed. In the initial state, the blades are fixed at optimum windward angles at which the blades can capture maximum wind energy. The working process of the adaptive variable pitch devices is as follows: the blades are at initial windward angles under the action of pre-tightening torque of the torsion springs below the rated wind speed, and the wind turbine captures the maximum wind energy at the current wind speed; the air torque acting on the blade root shafts exceeds a preset torque of the torsion springs above the rated wind speed, the windward angles of the blades rotate in the feathering direction under the action of the aerodynamic torque, the aerodynamic torque acting on the blades is correspondingly reduced until the aerodynamic torque is balanced with the preset torque, and the power captured by the wind wheel is stabilized at the rated power.

In the invention a protective cover is mounted on the tower, and the protective cover is mounted above the wind wheel. The protective cover is used for protecting the blades and the motor from being affected by rain, snow, hail and lightning, and can effectively prevent biological invasion.

In the invention the number of blades is at least three. The three blades are the minimum limit required to meet the lowest requirements of wind power generation, and the specific number of the blades is determined based on the actual situation.

In the invention the adaptive variable pitch devices are mounted equidistantly on the rotor of the motor. In this way, the blades connected to the adaptive variable pitch devices are uniformly arranged on the rotor of the motor, which can ensure the stability of the adaptive variable pitch driving device for a vertical axis wind turbine, and can also meet the requirements of rapid and stable power generation.

Further, a hub is mounted on the rotor of the motor, and the blade root shafts penetrate through the hub and are fixedly connected to the blades. The hub is mainly used for protecting the motor and the adaptive variable pitch devices. At the same time, negative pressure is produced on the leeward side of the wind wheel based on the principle of lift produced by an airfoil to secondarily accelerate the wind flowing through the wind wheel.

Preferably, the motor is a disc outer rotor motor, the rotor of the motor and the wind wheel are fixed together and rotate about a stator of the motor, and the stator of the motor is fixedly connected to the tower.

Further, a cable is arranged in the tower, and the cable is connected to the motor. The tower mainly plays a role in supporting and fixing, so that the cable arranged therein can transmit the electrical energy output by the motor to an electrical device.

Preferably a top deflector may be arranged on the outer side of the wind wheel.

A second objective of the present invention is to provide a working method of the adaptive variable pitch driving device for a vertical axis wind turbine.

The working method of the adaptive variable pitch driving device for a vertical axis wind turbine according to the present invention comprises:
Step 1: the wind deflector accumulates wind energy in all directions and blows the wind energy vertically to the wind wheel, and the wind wheel drives the rotor of the motor to rotate under the action of wind speed to generate electrical energy;
Step 2: the adaptive variable pitch devices automatically adjust the windward angles of the blades based on the wind speed to realize adaptive control of power and load.

A third objective of the present invention is to provide a wind turbine.

The wind turbine of the present invention comprises the adaptive variable pitch driving device for a vertical axis wind turbine.

Advantages of the present invention:
(1) The wind deflector of the present invention can concentrate wind energy, improve the quality of wind energy and improve the working efficiency of the turbine; the wind deflector can accumulate the wind energy in all directions, so a yaw wind direction alignment device is not required;
(2) Each blade of the present invention is equipped with an adaptive variable pitch device, which does not require a power source, and can automatically change the windward angle of the blade based on the wind speed to realize adaptive control of power and load;
(3) The rotating components of the wind turbine are all concealed inside the wind deflector, and thus do not cause visual pollution, do not affect the natural environment, and are not affected by rain, snow, hail and biological invasion, so the wind deflector can be widely used in cities.

### Brief Description of the Drawings

FIG 1 is a schematic diagram of an embodiment of an adaptive variable pitch driving device for a vertical axis wind turbine according to the present invention;
FIG 2 is a schematic diagram of another embodiment of an adaptive variable pitch driving device for a vertical axis wind turbine according to the present invention;
FIG 3 is a structure diagram of a wind wheel according to the present invention;
FIG 4 is a structure diagram of an adaptive variable pitch device according to the present invention;
FIG 5 is a working principle diagram of the adaptive variable pitch driving device for a vertical axis wind turbine according to the present invention.

In which: 1, protective cover; 2, hub; 3, blade; 5, wind deflector; 6, adaptive variable pitch device; 7, motor rotor; 8, tower; 9, first support bearing; 10, torsion spring; 11, second support bearing; 12, blade root shaft.

### Detailed Description of Embodiments

The technical solutions of the present invention will be clearly and completely described with reference to the accompanying drawings and embodiments. Apparently, the described embodiments are part of, not all of, the embodiments of the present invention.

In the description of the present invention, it should be noted that the terms "upper", "lower", "vertical", "horizontal", "inner", "outer" and the like indicate the orientations or positional relationships based on the orientations or positional relationships shown in the drawings. The terms are only for ease of description of the present invention and simplified description, but do not indicate or imply that the pointed devices or elements must have specific orientations or be constructed and operated in specific orientations. Therefore, the terms should not be understood to limit the present invention. Furthermore, the terms "first" and "second" are only for the sake of description, and cannot be understood as indicating or implying the relative importance.

In the description of the present invention, it should be noted that, unless otherwise specified, the terms "mounted" and "connected" should be generally understood, for example, the "connected" may be fixedly connected, detachably connected, integrally connected, mechanically connected, electrically connected, directly connected, indirectly connected through a medium, or connected inside two elements. Those of ordinary skill in the art could understand the specific meanings of the above terms in the present invention according to specific circumstances.

Further, the technical features involved in different embodiments of the present invention described below may be combined with each other as long as they do not conflict with each other.

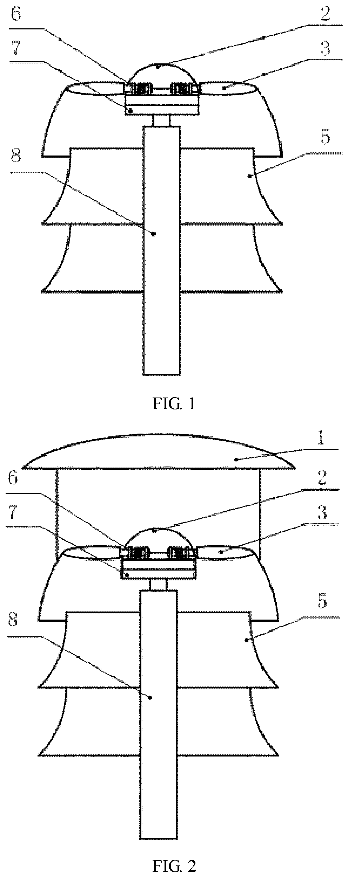

FIG 1 is a schematic diagram of an embodiment of a part of an adaptive variable pitch driving device for a vertical axis wind turbine according to the present invention. As shown in FIG 1, the adaptive variable pitch driving device for a vertical axis wind turbine includes a tower 8, a wind wheel and a motor are mounted at the top of the tower 8, a wind deflector 5 located below the wind wheel is further mounted on the tower 8, and the wind deflector 5 is used for accumulating wind energy in all directions and blowing the wind energy vertically to the wind wheel, so that the wind wheel drives a rotor 7 of the motor to rotate under the action of wind speed to generate electrical energy.

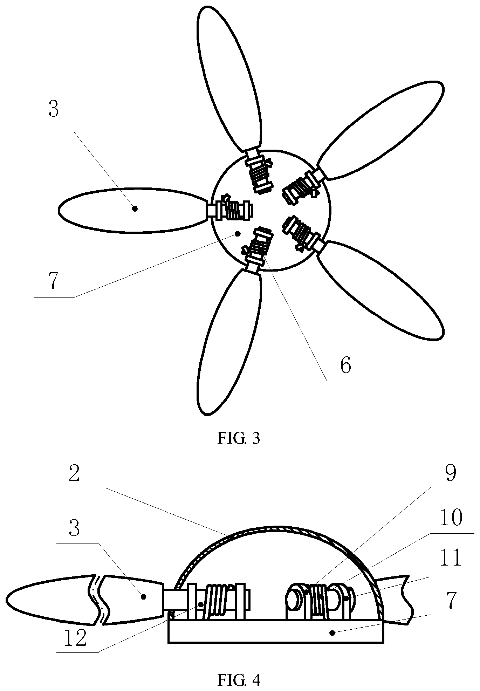

The wind wheel shown in FIG 3 includes a plurality of blades 3, an adaptive variable pitch device 6 is mounted on each blade 3, and the adaptive variable pitch devices 6 are mounted on the rotor 7 of the motor.

In the invention, as shown in FIG 2, a protective cover 1 is mounted on the tower 8, and the protective cover 1 is mounted above the wind wheel. The protective cover 1 is used for protecting the blades and the motor from being affected by rain, snow, hail and lightning, and can effectively prevent biological invasion.

In the present embodiment, a hub 2 is further mounted on the rotor 7, and blade root shafts 12 penetrate through the hub 2 and are fixedly connected to the blades 3. The hub 2 is mainly used for protecting the motor and the adaptive variable pitch devices. Meanwhile, negative pressure is produced on the leeward side of the wind wheel based on the principle of lift produced by an airfoil to secondarily accelerate the wind flowing through the wind wheel.

Further, a cable is further arranged in the tower 8, and the cable is connected to the motor. The tower mainly plays a role in supporting and fixing, so that the cable arranged therein can transmit the electrical energy output by the motor to an electrical device.

Preferably, the motor is a disc outer rotor motor, the rotor of the motor and the wind wheel are fixed together and rotate about a stator of the motor, and the stator of the motor is fixedly connected to the tower.

The number of blades is at least three. The three blades are the minimum limit required to meet the lowest requirements of wind power generation, and the specific number of the blades is determined based on the actual situation.

With the horizontal axis lift type blades, the power generation efficiency is high.

The adaptive variable pitch devices are mounted equidistantly on the rotor of the motor. In this way, the blades connected to the adaptive variable pitch devices are uniformly arranged on the rotor of the motor, which can ensure the stability of the adaptive variable pitch driving device for a vertical axis wind turbine, and can also meet the requirements of rapid and stable power generation.

FIG 4 is a structure diagram of an adaptive variable pitch device according to the present invention. The adaptive variable pitch device as shown in FIG 4 includes a first support bearing 9, a blade root shaft 12, a torsion spring 10, and a second support bearing 11. The blade root shaft 12 is fixedly connected to the blade 3, the blade root shaft 12 is connected to the first support bearing 9 and the second support bearing 11 respectively, the first support bearing 9 and the second support bearing 11 are both mounted on the rotor 7 of the motor, the torsion spring 10 is also sheathed on the blade root shaft 12, and the torsion spring 10 is also fixed to the rotor 7 of the motor.

Certain torque is preset for the torsion spring, and is aerodynamic torque acting on the blade root shaft at a rated wind speed. In the initial state, the blades are fixed at optimum windward angles at which the blades can capture maximum wind energy. The working process of the adaptive variable pitch devices is as follows: the blades are at initial windward angles under the action of pre-tightening torque of the torsion springs below the rated wind speed, and the wind turbine captures the maximum wind energy at the current wind speed; the air torque acting on the blade root shafts exceeds a preset torque of the torsion springs above the rated wind speed, the windward angles of the blades rotate in the feathering direction under the action of the aerodynamic torque, the aerodynamic torque acting on the blades is correspondingly reduced until the aerodynamic torque is balanced with the preset torque, and the power captured by the wind wheel is stabilized at the rated power.

The adaptive variable pitch devices in wind turbine of the present invention may also be hydraulic variable pitch devices or existing adaptive variable pitch devices of other structures.

The wind deflector of the present invention can concentrate wind energy, improve the quality of wind energy and improve the working efficiency of the turbine; the wind deflector can accumulate the wind energy in all directions, so a yaw wind setting device is not required; each blade of the present invention is equipped with an adaptive variable pitch device, which does not require a power source, and can automatically change the windward angle of the blade based on the wind speed to realize adaptive control of power and load; the rotating components of the wind turbine are all concealed inside the wind deflector, and thus do not cause visual pollution, do not affect the natural environment, and are not affected by rain, snow, hail and biological invasion.

In order to better ensure that the wind energy accumulated by the wind deflector in each direction is blown vertically to the wind wheel, a top deflector may be arranged on the outer side of the wind wheel.

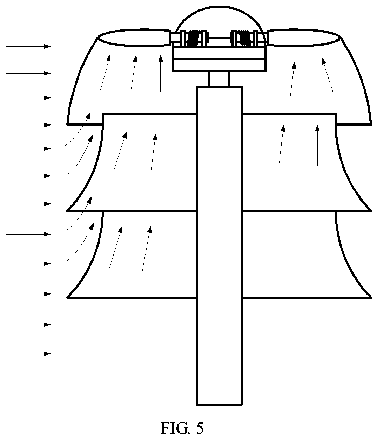

FIG 5 is a working principle diagram of the adaptive variable pitch driving device for a vertical axis wind turbine according to the present invention. As shown in FIG 5, the working method of the adaptive variable pitch driving device for a vertical axis wind turbine according to the present invention includes:
Step 1: the wind deflector accumulates wind energy in all directions and blows the wind energy vertically to the wind wheel, and the wind wheel drives the rotor of the motor to rotate under the action of wind speed to generate electrical energy;
Step 2: the adaptive variable pitch devices automatically adjust the windward angles of the blades based on the wind speed to realize adaptive control of power and load.

Due to different incoming flow directions, the wind load acting on the wind wheel is not uniformly distributed. When the wind load on a blade is too large, the adaptive variable pitch device of the blade pitches separately to reduce the wind load borne by the blade, so that the load acting on the entire wind wheel is balanced. The method can effectively reduce the probabilities of ultimate yield and fatigue failure. In order to reduce the vibration of the adaptive variable pitch device of the blade, a damping device may also be mounted to the blade root shaft.

The present invention further provides a wind turbine based on the driving device for a vertical axis wind turbine as shown in FIG 1 and FIG 2, the wind turbine including the adaptive variable pitch driving device for a vertical axis wind turbine. Other structures of the wind turbine are existing structures, and detailed descriptions are omitted herein.

The wind deflector in the wind turbine of the present invention can concentrate wind energy, improve the quality of wind energy and improve the working efficiency of the turbine; the wind deflector can accumulate the wind energy in all directions, so a yaw wind direction alignment device is not required; each blade of the present invention is equipped with an adaptive variable pitch device, which does not require a power source, and can automatically change the windward angle of the blade based on the wind speed to realize adaptive control of power and load; the rotating components of the wind turbine are all concealed inside the wind deflector, and thus do not cause visual pollution, do not affect the natural environment, and are not affected by rain, snow, hail and biological invasion, so the wind deflector can be widely used in cities.

The scope of the invention is defined by the appended claims.

## Claims

1. A wind turbine with a vertical axis of rotation comprising a tower (8), wherein a wind wheel and a motor are mounted at the top of the tower (8), the wind wheel comprises a plurality of blades (3), an adaptive variable pitch device (6) is mounted on each blade (3), and the adaptive variable pitch devices (6) are mounted on a rotor (7) of the motor; a wind deflector (5) is further mounted on the tower, the wind deflector (5) is located below the wind wheel, and the wind deflector (5) is used for accumulating wind energy in all directions and blowing the wind energy vertically to the wind wheel, so that the wind wheel drives the rotor (7) of the motor to rotate under the action of wind speed to generate electrical energy, **characterized in that** the blades (3) are of a horizontal axis lift type blade and the rotating parts of the wind turbine are concealed inside the wind deflector (5),
wherein the adaptive variable pitch device (6) comprises a first support bearing, a blade root shaft, a torsion spring and a second support bearing; the blade root shaft is fixedly connected to the blade, the blade root shaft is connected to the first support bearing and the second support bearing respectively, the first support bearing and the second support bearing are both mounted on the rotor of the motor, the torsion spring is also sheathed on the blade root shaft, and the torsion spring is also fixed to the rotor of the motor and wherein a protective cover (1) is further mounted on the tower (8), and the protective cover (8) is mounted above the wind wheel, wherein the number of blades (3) is at least three and wherein the adaptive variable pitch devices (6) are mounted equidistantly on the rotor (7) of the motor.

2. The wind turbine with a vertical axis of rotation according to claim 1, wherein a hub is further mounted on the rotor of the motor, and the blade root shafts penetrate through the hub and are fixedly connected to the blades.

3. The wind turbine with a vertical axis of rotation according to any of the preceding claims, wherein the motor is a disc outer rotor motor, the rotor (7) of the motor and the wind wheel are fixed together and rotate about a stator of the motor, and the stator of the motor is fixedly connected to the tower (8).

4. The wind turbine with a vertical axis of rotation according to any of the preceding claims, wherein a cable is arranged in the tower (8), and the cable is connected to the motor.

5. The wind turbine with a vertical axis of rotation according to any of the preceding claims, wherein a top deflector is arranged on the outer side of the wind wheel.

6. A working method of the wind turbine with a vertical axis of rotation according to any one of claims 1-5, comprising:
step 1: the wind deflector (5) accumulates wind energy in all directions and blows the wind energy vertically to the wind wheel, and the wind wheel drives the rotor (7) of the motor to rotate under the action of wind speed to generate electrical energy; and
step 2: the adaptive variable pitch devices (6) automatically adjust the windward angles of the blades (3) based on the wind speed to realize adaptive control of power and load.

## Patentansprüche

1. Windkraftanlage mit einem senkrechten Drehachse, die einen Mast (8) umfasst, wobei ein Windrad und ein Motor an der Oberseite des Mastes (8) montiert sind, das Windrad eine Vielzahl von Blättern (3) umfasst, eine anpassbare variable Blattverstellungsvorrichtung (6) auf jedem Blatt (3) montiert ist, und die anpassbaren variablen Blattverstellungsvorrichtungen (6) auf einem Rotor (7) des Motors montiert sind; ein Windabweiser (5) weiter auf dem Mast montiert ist, der Windabweiser (5) sich unter dem Windrad befindet, und der Windabweiser (5) zur Sammlung von Windenergie in allen Richtungen und zum senkrechten Blasen der Windenergie zum Windrad benutzt wird, sodass das Windrad den Rotor (7) zum Drehen unter der Tätigkeit der Windgeschwindigkeit antreibt, um elektrische Energie zu erzeugen, **dadurch gekennzeichnet, dass** die Blätter (3) in der Auftriebbauart mit einer horizontalen Achse sind, und die Drehteile der Windkraftanlage innerhalb des Windabweisers (5) versteckt sind,
wobei die Blattverstellungsvorrichtungen (6) ein erstes Stützlager, eine Blattfußwelle, eine Drehfeder und ein zweites Stützlager umfasst; die Blattfußwelle fest mit dem Blatt verbunden ist, die Blattfußwelle jeweils mit dem ersten Stützlager und dem zweiten Stützlager verbunden ist, das erste Stützlager und das zweite Stützlager beide auf dem Rotor des Motors montiert sind, die Drehfeder auch auf der Blattfußwelle ummantelt ist, und die Drehfeder auch auf dem Rotor des Motors befestigt ist, und wobei ein Schutzdeckel (1) weiter auf dem Mast (8) montiert ist, und der Schutzdeckel (1) oberhalb des Windrads montiert ist, wobei die Anzahl Blätter (3) zu mindestens drei beträgt, und wobei die anpassbaren variablen Blattverstellungsvorrichtungen (6) abstandsgleich auf dem Rotor (7) des Motors montiert sind.

2. Windkraftanlage mit einem senkrechten Drehachse nach Anspruch 1, wobei eine Nabe weiter auf dem Rotor des Motors montiert ist, und die Blattfußwellen durch die Nabe eindringen und fest mit den Blättern verbunden sind.

3. Windkraftanlage mit einem senkrechten Drehachse nach einem der vorhergehenden Ansprüche, wobei der Motor ein Scheibenaußenrotormotor ist, der Rotor (7) des Motors und das Windrad zusammen befestigt sind und um einen Stator des Motors drehen, und der Stator des Motors fest mit dem Mast (8) verbunden ist.

4. Windkraftanlage mit einem senkrechten Drehachse nach einem der vorhergehenden Ansprüche, wobei ein Kabel im Mast (8) angeordnet ist, und das Kabel mit dem Motor verbunden ist.

5. Windkraftanlage mit einem senkrechten Drehachse nach einem der vorhergehenden Ansprüche, wobei ein oberer Abweiser an der Außenseite des Windrades angeordnet ist.

6. Betriebsverfahren der Windkraftanlage mit einem senkrechten Drehachse nach einer der Ansprüche 1 -5, umfassend:
Schritt 1 : der Windabweiser (5) sammelt Windenergie aus allen Richtungen und bläst die Windenergie senkrecht zum Windrad, und das Windrad treibt den Rotor (7) des Motors zum Drehen unter der Tätigkeit der Windgeschwindigkeit an, um elektrische Energie zu erzeugen;
Schritt 2: die Blattverstellungsvorrichtungen (6) stellen automatisch die luvseitigen Winkel der Blätter aufgrund der Windgeschwindigkeit ein, um die anpassbare Steuerung von Leistung und Belastung durchzuführen.

## Revendications

1. Eolienne à axe vertical de rotation comprenant un mât (8), dans laquelle une roue éolienne et un moteur sont montés au sommet du mât (8), la roue éolienne comprend une pluralité de pales (3), un dispositif adaptatif à pas variable (6) est monté sur chaque pale (3), les dispositifs adaptatifs à pas variable (6) sont montés sur un rotor (7) du moteur; un déflecteur éolien est outre monté sur le mât, le déflecteur éolien (5) est localisé au-dessous de la roue éolienne, et le déflecteur éolien (5) est utilisé pour accumuler de l'énergie éolienne dans toutes les directions et pour souffler l'énergie éolienne verticalement vers la roue éolienne, de sorte que la roue éolienne entraîne le rotor (7) à tourner sous l'action de la vitesse du vent afin de générer de l'énergie électrique, **caractérisée en ce que** les pales (3) sont du type de pale à poussée selon un axe horizontal et que les parties rotatives de l'éolienne sont cachées à l'intérieur du déflecteur éolien (5), où le dispositif adaptatif à pas variable (6) comprend un premier roulement support, un arbre d'empattement de pale, un ressort de torsion et un deuxième roulement support ; l'arbre d'empattement de pale est raccordé de façon fixe à la pale, l'arbre d'empattement de pale est raccordé respectivement au premier roulement support et au deuxième roulement support, le premier roulement support et le deuxième roulement support sont tous les deux montés sur le rotor du moteur, le ressort de torsion est également gainé sur l'arbre d'empattement de pale, et le ressort de torsion est également fixé au rotor du moteur et où un capot protecteur (1) est en outre monté sur le mât (8), et le capot protecteur (1) est monté au-dessus de la roue éolienne, le nombre de pales (3) étant au moins de trois et les dispositifs adaptatifs à pas variable (6) étant montés à distance égale sur le rotor (7) du moteur.

2. Eolienne à axe vertical de rotation selon la revendication 1, dans laquelle un moyeu est monté en outre sur le rotor du moteur, et les arbres d'empattement de pale pénètrent à travers le moyeu et sont raccordés de façon fixe aux pales.

3. Eolienne à axe vertical de rotation selon l'une quelconque des revendications précédentes, dans laquelle le moteur est un moteur à rotor extérieur à disque, le rotor (7) du moteur et la roue éolienne sont fixés ensemble et tournent autour d'un stator du moteur, et le stator du moteur est raccordé de façon fixe au mât (8).

4. Eolienne à axe vertical de rotation selon l'une quelconque des revendications précédentes, dans laquelle un câble est disposé dans le mât (8), et le câble est connecté au moteur.

5. Eolienne à axe vertical de rotation selon l'une quelconque des revendications précédentes, dans laquelle un déflecteur supérieur est disposé sur le côté extérieur de la roue éolienne.

6. Procédé de fonctionnement d'une éolienne à axe vertical de rotation selon l'une quelconque des revendications 1 à 5, comprenant :
étape 1: le déflecteur éolien (5) accumule de l'énergie éolienne dans toutes les directions et souffle l'énergie éolienne verticalement vers la roue éolienne, et la roue éolienne entraîne le rotor (7) du moteur à tourner sous l'action de la vitesse du vent afin de générer de l'énergie électrique ;
étape 2 : les dispositifs adaptatifs à pas variable (6) règlent automatiquement les angles par rapport au vent des pales (3) sur base de la vitesse du vent afin de réaliser le réglage adaptatif de la puissance et de la charge.
